# EUROPÄISCHE PATENTSCHRIFT

(11) **EP 0 662 284 B1**
(45) Veröffentlichungstag und Bekanntmachung des Hinweises auf die Patenterteilung: **24.03.1999**
(21) Anmeldenummer: 94100208.1
(22) Anmeldetag: 08.01.1994
(51) Int. Cl.: A23C 9/154, A23C 3/037

(54) **Verfahren zur Herstellung eines sterilen Milchbreiprodukts**
Process for the preparation of a sterile milk gruel
Procédé de préparation d'une bouillie de lait stérile

(43) Veröffentlichungstag der Anmeldung: 12.07.1995
(73) Patentinhaber: SOCIETE DES PRODUITS NESTLE S.A., 1800 Vevey (CH)
(72) Erfinder: Kuehner, Holger, D-84453 Muehldorf am Inn (DE)
(74) Vertreter: Thomas, Alain

(56) Entgegenhaltungen:
- EP-A- 0 601 329
- FR-A- 2 173 057
- FR-A- 2 349 285
- FR-A- 2 559 035
- GB-A- 115 618
- DAIRY PACKAGING NEWSLETTER Nr. 18 , 1990 Seiten 1 - 4 A. OSTERMANN 'Aseptic packaging of liquid food with particulates'
- FOOD MANUFACTURE INTERNATIONAL Bd. 3, Nr. 1, 1986, Seiten 38 - 39 AN. 'New technology for German rice'
- PATENT ABSTRACTS OF JAPAN vol. 11, no. 167 (C-425)1987 & JP-A-62 000 245 (TSURUMI SEISAKUSHO KK)
- PATENT ABSTRACTS OF JAPAN vol. 14, no. 548 (C-785)1990 & JP-A-02 234 644 (AJINIOMOTO CO INC)
- Milchkundliches Speiselexikon 1981,S 89-91,247-248 und 449

## Beschreibung

Die Erfindung betrifft ein Verfahren zur Herstellung eines direkt verzehrbaren, sterilen Milchbreis in kontinuierlicher Weise, sowie der erhaltene sterile Milchbrei.

Um heute auf klassische Weise einen solchen Milchbrei herzustellen, nimmt man vorgelatinisierten trockenen Cerealiengriess und mischt diesen mit Milch bei einer Temperatur von ca. 35-40°C : Man bekommt dann ein verzehrbares Produkt, das, indem man die Menge oder zugegebenen Milch kontrollieren kann, fliessfähig und löffelfest ist. Man kann zusätzlich mit einem solchen Produkt die Struktur der Körner sowie den Geschmack des Breis sichern.

Der Artikel von A. Ostermann in "Dairy Packaging Newsletter" (1990, Nr. 18, S.1-4) erwähnt die Möglichkeit, durch UHT Behandlung, sterilisierte Verpackungen mit Flüssigkeiten und Stücken, z.B. Milchreis, herzustellen. Die Einzelheiten des Verfahrens sind nicht gegeben und es wird nur gesagt, daß die Sterilisation mit Stücken länger dauert als ohne Stücke. Das FR Patent Nr. 2173057 erwähnt ein Verfahren zum Erhitzen von flüssigen Lebensmitteln. Das EP patent Nr. 601 329 betrifft ein Verfahren zur Sterilisation bzw. Homogenisierung von Flüssigkeiten, z.B. Milch-Getreidebrei, wobei der Dampf und die Flüssigkeiten gegenströmig bei Schallgeschwindigkeit zusammengebracht werden.

Die Erfindung liegt die Aufgabe zugrunde, einen direkt verzehrbaren Milchbrei zur Verfügung zu stellen, wobei dieser Brei die Qualitäten des obenerwähnten klassischen Produktes bewahrt, d.h. fliessfähig und löffelfest ist, sowie die Körnerstruktur und einen guten Geschmack behält.

Diese Aufgabe wurde durch die Entwicklung eines Herstellungsverfahrens so gelöst, indem dieses Verfahren eine thermische Behandlung des Grießes benötigt, um ein steriles Produkt vorzubereiten, d.h. das langfristig und bei Raumtemperatur aufbewahrt werden kann. Die Schwierigkeit bestand darin, die thermische Behandlung so schonend wie möglich durchzuführen und trotzdem ein einwandfreies Produkt herstellen zu können.

Die Erfindung betrifft ein Verfahren zur Herstellung eines direkt verzehrbaren, sterilen Milchbreis in kontinuierlicher Weise, wobei man die Milch zwischen 50 und 80°C erhitzt, diese Milch mit mindestens einer Cerealie mischt, die erhaltene Mischung einer zweiten Erhitzung bei einer Temperatur zwischen 95 und 110°C unterwirft, die erhitzte Mischung bei atmosphärischem Druck und bei ca. 100°C entgast, einer UHT-Behandlung unterwirft und schließlich kühlt.

Dieser Brei ist zur Ernährung von Kleinkindern ab 3 Monaten verwendbar und kann ungeöffnet bei Raumtemperatur mindestens 9 Monate gelagert werden.

Die Milch wird normalerweise auf eine Temperatur zwischen 50 und 80°C erhitzt. Diese Erhitzung ist notwendig, um die Schonung des Endproduktes zu gewährleisten, um einen besseren Mischeffekt zu bekommen und damit das Korn bei der Mischung schon anquellen kann, um dann eine Sedimentation in der Linie zu vermeiden. Die Erhitzung der Milch wird konventionell durchgeführt, zum Beispiel mit einem Plattenwärmetauscher.

Die Anwesenheit der Cerealie bringt dem Brei eine Textur und eine gewisse Viskosität. Diese Cerealie wird zwischen Grieß, Hartweizengriess, Reismehlgriess, Hafermehl und Dinkelmehl gewählt. Die Partikeldurchmesser der Cerealie liegt zwischen 0,4 und 1 mm.

Der Vorteil des erfindungsgemässen Verfahrens ist, daß man auf kontinuierliche Weise arbeiten kann.

Aus ernährungswissentschaftlichen Gründen ist es auch bevorzugt, der Milch weitere Stoffe zuzugeben, wie zum Beispiel Zucker, Aromen, Süssmittel, Vitamine, Salze und ungesättigte Fettsäuren und/oder deren Glyceridester.

Um den Geschmack des Greis zu erhöhen, gibt man zusätzlich zu der Cerealie ein Fruchtpüree zu. Der Typ der Frucht ist nicht kritisch und kann irgendwelcher sein, zum Beispiel Banane oder Aprikose. Anstatt dieser Frucht ,ist es auch möglich, Schokolade oder Kakaopulver zuzugeben.

Die Mischung der Cerealie und Fruchtpüree findet in einem herkömmlichen Mischer statt, wobei eine gewisse Kontaktzeit mit der Milch gewährleistet sein muss.

Nach der Mischung führt man eine zweite Erhitzung bei einer Temperatur zwischen 95 und 110 °C durch. Der Grund dieser Behandlung ist dreifach : Erstens, um die folgende Entgasung bei atmospherischen Bedingungen zu erlauben, denn, bei zum Beispiel 70 °C wäre es nur möglich, unter Vakuum zu arbeiten, was zur Schonung der Körner absolut nicht akzeptabel ist; zweitens, um eine Verhinderung der Sedimentation zu garantieren; und drittens, um eine Tötung der vegetativen Keime zu gewährleisten. Die Erhitzung wird auf klassische Weise durchgeführt, zum Beispiel mit einem Röhrenerhitzer.

Eine Entgasung der Mischung wird dann bei atmospherischem Druck und bei ca. 100 °C durchgeführt um eine Oxydation des Produktes zu vermeiden. Danach macht man eine UHT-Behandlung bei 130-140 °C durch direkte Erhitzung, zum Beispiel durch direkte Injektion von Dampf in die Mischung. Diese Lösung erlaubt eine schonende thermische Behandlung.

Die erhitzte Mischung muss dann gekühlt werden, was in eine oder mehreren Stufen geschieht : Die Kühltemperatur liegt im Bereich von 20 bis 80 °C. Der fertige Brei kann entweder zwischengelagert oder direkt aseptisch abgefüllt werden. Das Produkt wird normalerweise in Gläser von 150 bis 300 g abgefüllt.

Die Erfindung betrifft weiter den direkt verzehrbaren sterilen Milchbrei, wobei er zwischen 50 und 80% Milch, zwischen 5 und 10 % Cerealien, zwischen 0 und 30 % Frucht und zwischen 0 und 5 % Zucker enthält. Als Milch verwendet man vorzugsweise Vollmilch, die Proteine und Fett bringt. Die Cerealie ist eine Kohlenhydrat-Quelle, die Frucht bringt eine spezifische Geschmacksnote und Zucker gibt eine süsse Note.

Der Brei kann zusätzlich Aromen, Vitaminen, Salze und ungesättigte Fettsäuren und/oder deren Glyceridester enthalten. Als Vitamine verwendet man, alle wasser- oder fettlöslichen Vitamine, als Salze Calcium- und Eisensalze und als Glyceridester ungesättigter Fettsäuren Maiskeimöl.

Es ist auch möglich, anstatt Frucht Kakaopulver oder Pflanzenextrakt, wie zum Beispiel Vanilleextrakt, hinzuzufügen.

Der Verzehr kann sowohl kalt oder warm geschehen. Das erfindungsgemässe Verfahren gibt ein fertiges Produkt, das einen guten Geschmack und eine erhaltene Textur der Cerealienkörner gewährleistet.

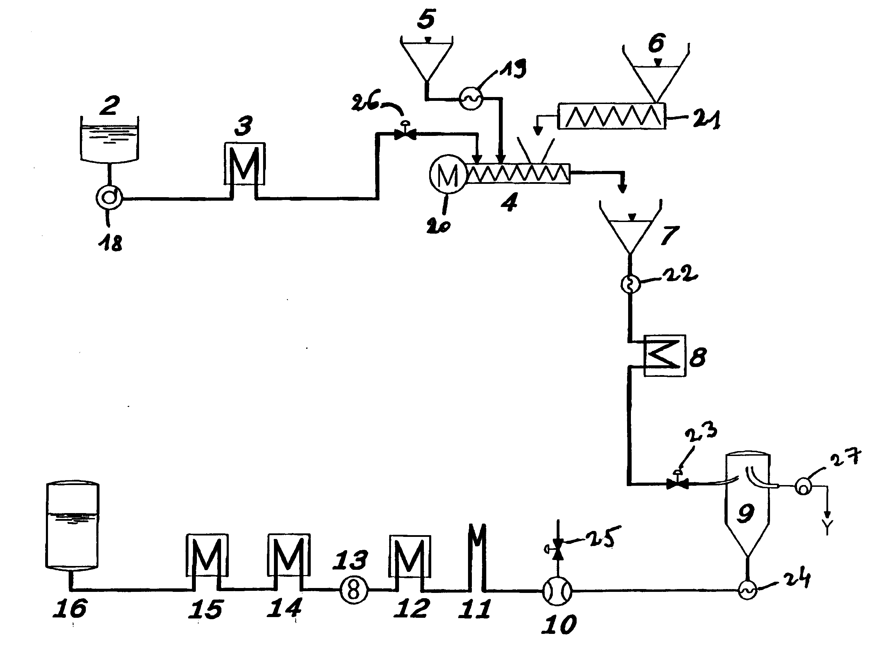

Das erfindungsgemässe Verfahren wird jetzt anhand der beiliegenden Figur näher erläutert.

Die Rohmischung, die alle Komponenten enthält, wie die Milch, den Zucker, die Vitamine, die Salze und die Fettsäureester, wird im Behälter 2 gelagert und durch die Pumpe 18 durch den Plattenwärmetauscher 3 zur Erhitzung auf 70 °C gefördert. Das Regelventil 26 reguliert die Zufuhr der Rohmischung, um die Höhe der Mischung im Zwischenpuffer 7 zu kontrollieren .Im durch Motor 20 angetriebenen dynamischen Mischer 4 wird auch die Cerealie und das Fruchtpüree zugeführt : in der Dosierstation 6 wird die Cerealie dosiert und geht durch Schneckendosierer 21 bis zum Mischer 4. Das Fruchtpüree wird durch eine Pumpe 19 von der Dosierstation 5 ebenfalls zum Mischer 4 zugeführt.

Die Drehzahl des Mischers 4 wird so gewählt, um eine genügende Kontaktzeit zu erlauben. Die Mischung wird dann vom Zwischenpuffer 7 durch eine Pumpe 22 durch den Röhrenerhitzer 8 gefördert, um eine Temperatur von 105 °C zu erreichen. Das Druckhalteventil 23 kann die Erhaltung des Druckes gewährleisten. Die Mischung wird dann in einer Entgasungsstation 9 durch eine Pumpe 27 bei atmospherischem Druck bei 100 °C entgast. Man bekommt auf diese Art und Weise eine schonende Behandlung. Die Körner sind schon fast maximal gequollen ohne Aenderung der Textur.

Die entgaste Mischung wird dann durch eine Pumpe 24 in das Dampfinjektionssystem 10 gebracht : Eine Temperatur von 136 °C wird erreicht, und das Regelventil 25 reguliert die Dampfzuführung. Die aseptische Kreiskolbenpumpe 13 hält den Druck stromaufwärts und drückt das Produkt stromabwärts. Die Mischung wird während 90 Sekunden auf der obenerwähnten Temperatur dank UHT-Heisshaltung 11 gehalten. Danach wird die Kühlung in drei Stufen durchgeführt ,resp. in 12, 14 und 15, auf Temperaturen von resp. von 80, 50 und 40 °C.

Der fertige Brei wird dann im Aseptiktank 16 gelagert und kann auf eine herkömmliche aseptische Abfüllanlage gebracht werden.

Die Beschreibung wird jetzt anhand der folgenden Beispiele naher erläutert.

### Beispiel 1 : Milchgriessbrei Schokolade.

Eine Rohmischung von 75 kg Vollmilch, 4,5 kg Zucker, 1 kg Maiskeimöl, 1 kg Kakaopulver, Vitaminen, Calciumcarbonat und Ascorbinsäure wird vorbereitet und auf eine Temperatur von 70 °C gebracht. Man dosiert dazu 5,9 kg Hartweizengriess. Als Durchsatz der Rohmischung und der Gerealie werden resp. 1500 l/St. und 100 kg/St gewählt.Die Mischung wird dann auf eine Temperatur von 105 °C gebracht und entgast.
Die UHT-Behandlung wird bei 140 °C mit einer Heisshaltezeit von 90 Sekunden und die Kühlung in drei Stufen bei resp. 75, 50 und 40 °C durchgeführt. Die Abfüllung wird dann in Gläser von 200 g vorgenommen.

Man bekommt ein Produkt mit griessartig strukturierter Oberfläche,breiig dick, löffelfest und nicht tropfend.

### Beispiel 2 : Milchgriessbrei Vanille.

Eine Rohmischung von 75 kg Vollmilch, 3 kg Zucker, 1 kg Maiskeimöl, 0,3 kg Vanilleextrakt, Vitaminen, Calciumcarbonat und Ascorbinsäure wird vorbereitet und auf eine Temperatur von 70 °C gebracht. Man dosiert dazu 6,8 kg Hartweizengriess. Die weitere thermische Behandlung wird wie im Beispiel 1 durchgeführt.

Man bekommt ein weisses ,leicht gelbliches Produkt mit einem milchig frischen Vanillegeruch. Die Textur der Körner ist mit derjenigen eines frischen Produktes vergleichbar.

### Beispiel 3 : Milchgriessbrei Banane.

Eine Rohmischung von 70 kg Vollmilch, 2,7 kg Zucker, 1 kg Maiskeimöl, 2 kg Bananensaftkonzentrat, Vitaminen, Calciumcarbonat und Ascorbinsäure wird vorbereitet und auf eine Temperatur von 70 °C gebracht. Man dosiert dazu 6,5 kg Hartweizengriess. Die weitere thermische Behandlung wird wie im Beispiel 1 durchgeführt.

Man bekommt ein Produkt mit einer leicht beige Farbe, cremig, glatt, fliessend und leicht tropfend.

## Patentansprüche

1. Verfahren zur Herstellung eines direkt verzehrbaren sterilen Milchbreis in kontinuierlicher Weise, wobei man die Milch zwischen 50 und 80°C erhitzt, diese Milch mit mindestens einer Cerealie mischt, die erhaltene Mischung einer zweiten Erhitzung bei einer Temperatur zwischen 95 und 110°C unterwirft, die erhitzte Mischung bei atmosphärischem Druck und bei ca. 100°C entgast, einer UHT-Behandlung unterwirft und schließlich kühlt.

2. Verfahren gemäß Anspruch 1, dadurch gekennzeichnet, daß bei der Cerealie zwischen Grieß, Hartweizengriess, Reismehlgriess, Maisgriess, Hafermehl und Dinkelmehl gewählt wird.

3. Verfahren gemäß Ansprüche 1 oder 2, dadurch gekennzeichnet, daß der Partikeldurchmesser der Cerealie zwischen 0,4 und 1 mm liegt.

4. Verfahren gemäss Ansprüche 1 bis 3, dadurch gekennzeichnet, daß der Milch Zucker, Aromen, Süssmittel, Vitamine, Salze und ungesättigt Fettsäuren und/oder deren Glyceridester zugegeben werden.

5. Verfahren gemäss Ansprüche 1 bis 4, dadurch gekennzeichnet, dass der Milch zusätzlich zu der Cerealie ein Fruchtpüree zugegeben wird.

6. Verfahren gemäss Ansprüche 1 bis 5, dadurch gekennzeichnet, dass die UHT-Behandlung zwischen 130 und 140°C und während 60 bis 120 Sekunden durchgeführt wird.

7. Verfahren gemäss Ansprüche 1 bis 6, dadurch gekennzeichnet, dass die Kühlung zwischen 20 und 80°C geschieht.

8. Verfahren gemäss Ansprüche 1 bis 7, dadurch gekennzeichnet, dass das erhaltene Produkt zwischengelagert oder direkt aseptisch abgefüllt wird.

## Claims

1. Process for the preparation of a directly consumable sterile milk pap in a continuous operation, wherein the milk is heated to between 50°C and 80°C, this milk is mixed with at least one cereal, the resulting mixture is subjected to a second heating at a temperature of between 95°C and 110°C, the heated mixture is degassed at atmospheric pressure and at about 100°C, subjected to a UHT treatment and finally cooled.

2. Process according to claim 1, characterised in that the cereal is selected from cereal semolina, hard wheat semolina, rice flour semolina, maize semolina, oatmeal and spelt meal.

3. Process according to claim 1 or 2, characterised in that the particle diameter of the cereal is between 0.4 and 1 mm.

4. Process according to claims 1 to 3, characterised in that sugar, aromas, sweeteners, vitamins, salts and unsaturated fatty acids and/or glyceride esters thereof are added to the milk.

5. Process according to claims 1 to 4, characterised in that, in addition to the cereals, a fruit purée is added to the milk.

6. Process according to claims 1 to 5, characterised in that the UHT treatment is carried out at between 130°C and 140°C and for 60 to 120 seconds.

7. Process according to claims 1 to 6, characterised in that the mixture is cooled to between 20°C and 80°C.

8. Process according to claims 1 to 7, characterised in that the product obtained is temporarily stored or directly packed aseptically.

## Revendications

1. Procédé de préparation continue d'une bouillie au lait stérile directement consommable, dans lequel on chauffe le lait entre 50 et 80°C, on mélange le lait avec au moins une céréale, on soumet le mélange obtenu à un second chauffage à une température comprise entre 95 et 110°C, on dégaze le mélange chauffé à la pression atmosphérique et à environ 100°C, on le soumet à un traitement à ultra-haute température et, finalement, on le refroidit.

2. Procédé suivant la revendication 1, caractérisé en ce qu'on choisit la céréale entre de la semoule, de la semoule de blé dur, de la semoule de farine de riz, de la semoule de maïs, de la farine d'avoine et de la farine de blé épeautre.

3. Procédé suivant la revendication 1 ou 2, caractérisé en ce que le diamètre des particules de la céréale se situe entre 0,4 et 1 mm.

4. Procédé suivant les revendications 1 à 3, caractérisé en ce que le lait est additionné de sucre, d'arômes, d'édulcorants, de vitamines, de sels et d'acides gras non saturés et/ou de leurs esters de glycérol.

5. Procédé suivant les revendications 1 à 4, caractérisé en ce qu'une purée de fruit est ajoutée au lait en plus de la céréale.

6. Procédé suivant les revendications 1 à 5, caractérisé en ce que le traitement à ultra-haute température est conduit entre 130 et 140°C et pendant 60 à 120 secondes.

7. Procédé suivant les revendications 1 à 6, caractérisé en ce que le refroidissement est effectué entre 20 et 80°C.

8. Procédé suivant les revendications 1 à 7, caractérisé en ce que le produit obtenu est stocké provisoirement ou mis directement en récipients dans des conditions aseptiques.
